# EUROPEAN PATENT APPLICATION

(11) **EP 1 690 669 A2**
(43) Date of publication of application: **16.08.2006**
(21) Application number: 06075139.3
(22) Date of filing: 24.01.2006

(54) **Method for preparing a latex-based foam**

(30) Priority: 14.02.2005 NL 1028262
(71) Applicant: Artilat Naamloze Vennootschap, 2560 Nijlen (BE)
(72) Inventor: Groenweghe, Ronald Jose, 8510 Marke (BE)
(74) Representative: Van kan, Johan Joseph Hubert

(57) **Abstract**

The present invention relates to a method for preparing a latex-based foam, in which, in addition to the auxiliaries commonly used for foam preparation, a blowing agent is added to the latex, after which the blowing agent is activated with heating and the mixture is vulcanised and formed into a latex foam. One aim of the present invention is to provide a method for preparing a latex-based foam in which use is made of an amount of starting material for the foam-forming process such that almost the entire amount of starting material is used for the benefit of the foam product to be formed.

## Description

The present invention relates to a method for preparing a latex-based foam, in which, in addition to the auxiliaries commonly used for foam preparation, a blowing agent is added to the latex, after which the mixture thus obtained is vulcanised with heating and formed into a latex foam.

Such a method is known per se from British patent GB 828.643, in which a mixture of latex, zinc oxide, sulphur, accelerator, antioxidant, sodium polyacrylate, methyl cellulose and an azodicarbonamide or an arylsulphonyl hydrazide, as the blowing agent, is formed into a spongy foam material. A disadvantage of such a method is the use of a blowing agent that pollutes the environment.

Nowadays, two methods are in principle used for the preparation of foam rubber, notably the so-called Dunlop process and the Talalay process, which processes both make use of latex as the basic raw material. The employed latex is a composite latex consisting of SBR (styrene butadiene rubber) and natural latex, although a 100% natural latex or a 100% SBR latex may also be processed. Before the SBR latex is added to the natural latex, a soap is dosed to prevent instability and coagulation of the mixture thus obtained. Examples of commonly used auxiliaries are sulphur, zinc oxide, accelerants, antioxidants, sodium silicofluoride, zinc mercaptobenzothiazole, zinc diethyldithiocarbamate, diphenylguanidine, dispersants, ammonia, casein, calgon, bentonite and water. The auxiliaries usually used for foam preparation are added to the latex thus composed, after which mechanical frothing leads to the formation of a foam, which foam is poured into certain dies or moulds. The mass is caused to solidify, using heat, by gelling agents introduced into the latex, and subsequently vulcanised. The sodium silicofluoride solution is usually added to the frothed latex mixture, to which the usual auxiliaries have already been added, only at the moment that the foam material is ready to be introduced into the moulds, after which the formation of a gel takes place. Thus, an irreversible formation of a firm, homogeneous gel takes place, which gel assumes the shape of the moulds into which the foam material has been introduced.

A drawback occurring in such a process is that when the moulds are closed, an amount of superfluous foam material escapes from the moulds, which implies a loss of costly raw materials. In for example a mould commonly used for mattresses, which mould is fitted with pins to provide the ultimate product with perforations and usually has a volume of about 500 litres, a loss of 8% raw material is thus not uncommon. The material that escapes from the moulds cannot be reused, and must hence be regarded as waste, which has an adverse influence on the cost price.

One aim of the present invention is hence the development of a method for preparing a latex-based foam which does not involve the undesired escape of starting material from the mould.

Another aim of the present invention is to provide a method for preparing a latex-based foam in which use is made of an amount of starting material for the foam-forming process such that almost the entire amount of starting material is used to the benefit of the end product to be formed.

The present invention as mentioned in the introduction is characterized in that it comprises 1,1,1,3,3-pentafluorobutane as the blowing agent.

The aforementioned blowing agent shows particularly good compatibility with the latex and the auxiliaries commonly used with latex. The aforementioned blowing agent moreover has a low boiling point, notably of around 40 degrees Centigrade, so that it will be activated already at a slight increase in temperature. The blowing agent ensures that, during the foam-forming process, the mould in which the foam-forming process takes place with heating is almost completely filled, so that there is no question of any "waste". After the mould has been closed the blowing agent is activated by the elevated temperature, as a result of which the mould's entire internal volume is filled. The vulcanisation of the sulphur bridges of the latex components ensures that the end product, notably latex foam, acquires a stable structure. By using the present method it has hence proved possible to realise a substantial saving in costs because no latex and auxiliaries are lost in the foam-forming process.

In a particular embodiment it is preferable for the blowing agent concerned to comprise one or more supporting gases, chosen from the group comprising CO₂, cyclopentane, isopentane, n-pentane and CF₃-CH₂F. Supporting gases of this type are for example desirable for obtaining a foam with a specific density.

The latex used in the present method is in a particular embodiment a combination of natural rubber or natural latex and styrene butadiene rubber (SBR), with which in particular very good cross-linking of the polymer structure is obtained. The present method can however also be carried out using 100% natural latex or 100% synthetic latex, such as SBR.

The blowing agent concerned can in the present method be added in several ways, for example by beforehand mixing it with the auxiliaries commonly used for foam production, after which the mixture of blowing agent and auxiliaries thus obtained is dosed to the latex, which latex has previously already been provided with air, after which the "frothed" mixture of latex, air, blowing agent and auxiliaries is formed into a latex foam. In certain embodiments it is however also desirable to mix the auxiliaries and the blowing agent with the latex, after which air is introduced into the mixture thus obtained, after which the remaining auxiliaries are added and the end product, the latex foam, is subsequently formed.

In another particular embodiment the blowing agent is first added to the latex, after which the mixture thus obtained is frothed with air. The auxiliaries commonly used for foam preparation are then added to the mixture obtained above to be subsequently formed into the end product, the latex foam.

The present invention further relates to a latex foam obtained by using the present method.

## Claims

1. A method for preparing a latex-based foam, in which, in addition to the auxiliaries commonly used for foam preparation, a blowing agent is added to the latex, after which the mixture thus obtained is vulcanised with heating and formed into a latex foam, **characterized in that** the blowing agent comprises 1,1,1,3,3-pentafluorobutane.

2. A method according to claim 1, **characterized in that** the blowing agent furthermore comprises one or more supporting gases chosen from the group comprising CO₂, cyclopentane, isopentane, n-pentane and CF₃-CH₂F.

3. A method according to any one or more of the above claims, **characterized in that** the latex is chosen from natural latex, synthetic latex or a combination hereof.

4. A method according to any one or more of the above claims, **characterized in that** air is introduced into the latex, after which the blowing agent and the auxiliaries are fed into the latex provided with air to be subsequently formed into a latex foam.

5. A method according to any one or more of claims 1-3, **characterized in that** the blowing agent is added to the latex, after which air is introduced into the mixture thus obtained, and is subsequently mixed with the auxiliaries to then be formed into a latex foam.

6. A latex foam obtained according to a method as described in any one of claims 1-5.
